(19) Europäisches Patentamt
European Patent Office
Office européen des brevets

(11) **EP 2 111 677 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
***H01S 3/30*** (2006.01)

(21) Anmeldenummer: **07817680.7**

(22) Anmeldetag: **17.10.2007**

(86) Internationale Anmeldenummer:
**PCT/DE2007/001845**

(87) Internationale Veröffentlichungsnummer:
**WO 2008/055461 (15.05.2008 Gazette 2008/20)**

(54) **BEEINFLUSSUNG DER AUSBREITUNGSGESCHWINDIGKEIT VON SIGNALEN IN LICHTLEITERN**

INFLUENCING THE PROPAGATION VELOCITY OF SIGNALS IN OPTICAL FIBRES

INFLUENCE DE LA VITESSE DE PROPAGATION DE SIGNAUX DANS DES GUIDES DE LUMIERE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.11.2006 DE 102006052860**

(43) Veröffentlichungstag der Anmeldung:
**28.10.2009 Patentblatt 2009/44**

(73) Patentinhaber: **Deutsche Telekom AG 53113 Bonn (DE)**

(72) Erfinder: **SCHNEIDER, Thomas 14552 Michendorf OT Wilhelmshorst (DE)**

(74) Vertreter: **Braun-Dullaeus, Karl-Ulrich Braun-Dullaeus Pannen Platz der Ideen 2 40476 Düsseldorf (DE)**

(56) Entgegenhaltungen:
- SANGHOON CHIN ET AL: "Zero gain slow and fast light propagation in an optical fiber" OPTICS EXPRESS, Bd. 14, Nr. 22, 30. Oktober 2006 (2006-10-30), Seiten 10684-10692, XP002527259 OPT. SOC. AMERICA ,USA ISSN: 1094-4087
- M G HERRAEZ ET AL: "Arbitrary bandwidth brillouin slow light in optical fibers" OPTICS EXPRESS, Bd. 14, Nr. 4, 20. Februar 2006 (2006-02-20), Seiten 1395-1400, XP002527260 OPT. SOC. AMERICA, USA ISSN: 1094-4087
- SCHNEIDER T ET AL: "Distortion reduction in cascaded slow light delays" ELECTRONICS LETTERS, Bd. 42, Nr. 19, 14. September 2006 (2006-09-14), Seiten 1110-1112, XP006027441 IEE STEVENAGE, GB ISSN: 0013-5194
- K Y SONG ET AL: "Gain-assisted pulse advancement using single and double Brillouin gain peaks in optical fibers" OPTICS EXPRESS, Bd. 13, Nr. 24, 28. November 2005 (2005-11-28), Seiten 9758-9765, XP002527261 OPT. SOC. AMERICA, USA ISSN: 1094-4087
- K Y SONG ET AL: "25 GHz bandwidth Brillouin slow light in optical fibers" OPTICS LETTERS, Bd. 32, Nr. 3, 1. Februar 2007 (2007-02-01), Seiten 217-219, XP002527262 OPT. SOC. AMERICA ,USA ISSN: 0146-9592
- T. SCHNEIDER ET AL: "Potential ultra wide slow-light bandwidth enhancement" OPTICS EXPRESS, Bd. 14, Nr. 23, 13. November 2006 (2006-11-13), Seiten 11082-11087, XP002527263 OPT. SOC. AMERICA, USA ISSN: 1094-4087

**Beschreibung**

Die Erfindung betrifft ein Verfahren zur Beeinflussung, insbesondere zur Minderung, der Ausbreitungsgeschwindigkeit von Lichtsignalen, die sich mit einer Gruppengeschwindigkeit innerhalb eines Wellenleiters, insbesondere innerhalb einer Glasfaser, in Ausbreitungsrichtung ausbreiten, wobei in den Wellenleiter eine Pumpstrahlung eines begrenzten Frequenzbereiches entgegen der Ausbreitungsrichtung der Lichtsignale eingekoppelt wird, wobei zwischen der Pumpstrahlung und den Lichtsignalen stimulierte Brillouin Streuung (SBS) stattfindet, wobei zusätzlich zu der ersten Pumpstrahlung eine zweite Pumpstrahlung in den Wellenleiter eingekoppelt wird, deren Frequenz gegenüber der ersten Pumpstrahlung derart verschoben ist, dass das Gewinnspektrum der zweiten Pumpstrahlung das Verlustspektrum der ersten Pumpstrahlung zumindest teilweise überlagert. Die Erfindung betrifft zudem ein System zur Umsetzung des Verfahrens.

Ein solches Verfahren ist aus Chin et al. Optics Express, Vol. 14, No. 22, Seiten 10684 bis 10692, bekannt. Dabei wird zusätzlich zu der ersten Pumpstrahlung eine zweite Pumpstrahlung in den Wellenleiter eingekoppelt, wobei deren Frequenz gegenüber der ersten Pumpstrahlung derart verschoben ist, dass das Gewinnspektrum der einen Pumpstrahlung das Verlustspektrum der anderen Pumpstrahlung zumindest teilweise überlagert. In diesem Fall wird jedoch ein schmalbandiger Gewinn mit einem breitbandigen Verlust überlagert, um die Verzögerung der Pulse von der Verstärkung der Pulse zu entkoppeln.

Bekanntermaßen können Signale, die auch in Form von Lichtpulsen vorliegen können, gegenüber anderen Signalen verzögert werden, indem die einen einen längeren Leiter als die anderen durchlaufen müssen. Darauf aufbauend ist eine Art der optischen Speicherung bekannt, bei der unterschiedlich lange Fasern als Verzögerungsleitungen in Kombination mit optischen Schaltern genutzt werden. Die Verzögerung wird durch die Zeit bestimmt, die das Signal braucht, um sich in der jeweiligen Faser auszubreiten. Abhängig von der gewünschten Verzögerung leitet der Schalter das Signal in die Faser der entsprechenden Länge. Derartige Systeme benötigen viel Platz, sind kostenaufwendig und insofern unflexibel, als sie sich nur auf Vielfache einer bestimmten festen Verzögerungszeit einstellen lassen. Außerdem treten in diesen Systemen starke Verluste auf, die eine zusätzliche Verstärkung der Signale nötig machen.

Während diese "konventionellen" optischen Zwischenspeicher das Signal über unterschiedlich lange Wege schicken, wird bei dem sogenannten "Slow-Light"-Ansatz die Ausbreitungsgeschwindigkeit der Signale entlang eines einzigen Weges verändert. Dies geschieht über eine Verringerung oder eine Steigerung der Gruppengeschwindigkeit der Signale auf einer bestimmten Wegstrecke. So konnte in Experimenten gezeigt werden, dass die Ausbreitungsgeschwindigkeit der Signale zwischen nahezu Null und Vakuum-Überlichtgeschwindigkeit variiert werden kann.

Zur Verzögerung der Pulse lassen sich unterschiedliche Mechanismen und Materialsysteme nutzen. Beispielsweise kann der Gruppengeschwindigkeitsindex in ultrakalten und in heißen Atomgasen eine Größenordnung von $10^6$ annehmen, was die Geschwindigkeit der Pulse, wie gezeigt wurde, auf 17m/s reduzieren kann. Ähnliche Ergebnisse wurden auch mit Rubidium Dampf, Halbleiter-Nanostrukturen, Quantum-Well und Quantum-Dot Strukturen sowie Wellenleitern auf der Basis der photonischen Bandlücke erreicht.

Es ist zudem bekannt, dass sich die Gruppengeschwindigkeit auch in optischen Glasfasern verändern lässt. Insofern lässt sich diese Technik in der optischen Nachrichtenübertragung und in Zukunft auch in optischen Computersystemen einsetzen. Dabei wird der schmalbandige Gewinn unterschiedlicher nichtlinearer Effekte zur Veränderung der Gruppengeschwindigkeit genutzt. So konnten Signale mit Raman-Streuung, mit Raman-gestützter parametrischer Verstärkung sowie mit einer Kombination aus Vierwellenmischung und linearer Dispersion verzögert werden ("Slow-Light"). Auch mit stimulierter Brillouin Streuung (SBS) konnte eine Verzögerung optischer Pulse in Glasfasern erreicht werden.

Dabei hat das Verfahren der SBS verschiedene Vorteile: So benötigt die SBS zumindest in langen Fasern nur geringe Pumpleistungen von wenigen mW, um große Verzögerungen zu bewirken. Zudem funktioniert SBS in allen Fasertypen und - zumindest in einem Transparenzbereich - bei allen Wellenlängen. Das gilt insbesondere für die Fasern, die heute in der optischen Nachrichtentechnik eingesetzt werden. Außerdem ist von Vorteil, dass sich die preiswerten und zuverlässigen Standardkomponenten der Nachrichtentechnik nutzen lassen. Da nur geringe Pumpleistungen benötigt werden, ist es sogar möglich, dass einfache DFB-Laserdioden als Pumpquellen zum Einsatz kommen. Weiterhin ist von Vorteil, dass mit der SBS die Gruppengeschwindigkeit über einen weiten Bereich zwischen weniger als 71000 km/s bis zur Vakuum-Überlichtgeschwindigkeit kontrolliert werden können.

Bekanntermaßen ist die SBS das Ergebnis der Wechselwirkung zweier sich in entgegengesetzter Richtung ausbreitender Wellen, nämlich einer starken Pump- und eine schwachen Probewelle. Wenn der Energie- und Impulserhaltungssatz, respektive die Frequenz- und Phasenanpassungsbedingung erfüllt sind, wird in der Faser eine akustische Welle erzeugt, an der Photonen der Pumpwelle zur Probewelle gestreut werden können, was unter bestimmten Bedingungen zu einer stimulierten Wechselwirkung führt. Die SBS kann als Verstärkungsprozess beschrieben werden, bei dem eine starke Pumpwelle mit der Frequenz $f_p$ in der ihr entgegengesetzten Richtung einen schmalbandigen Gewinn in einem spektralen Bereich um $f_p - f_b$ (Stokes) und einen Verlust um $f_p + f_b$ (anti Stokes) erzeugt. Dabei ist $f_b$ die Frequenz der generierten akustischen Welle.

Diese sogenannte Brillouin-Verschiebung hängt von der Art der Faser und den Umgebungsbedingungen ab. Nach den Kramers-Kronig Beziehungen geht der Prozess des Brillouin-Gewinns respektive des Brillouin-Verlustes einher mit einer Änderung des Brechungsindex in der Faser, der als Folge in den beiden oben genannten spektralen Bereichen eine starke Frequenzabhängigkeit aufweist. Auf Grund der starken Änderung des Brechungsindex mit der Frequenz ergibt sich ein großer, schmalbandiger Gruppenbrechungsindex

$$n_g = n + \omega \, dn \, /d\omega \qquad (1)$$

innerhalb der Faser. Dieser verringert wiederum die Gruppengeschwindigkeit der sich gegen die Ausbreitung des Pumplichts ausbreitenden Pulse und führt zu einer Verzögerung ihrer Ankunftszeit am Ausgang der Faser um

$$\Delta T_g = g_0 P_p L \, / \, (\Gamma_\beta A_{eff}) \qquad (2)$$

mit $g_0$ als Brillouin-Gewinnkoeffizienten, L als der Länge und $A_{eff}$ als der effektiven Fläche der Faser. Mit $P_p$ ist die Leistung der Pumpwelle und mit $\Gamma_\beta/2\pi$ die Brillouin Bandbreite innerhalb der Faser bezeichnet. Nach Gleichung (2) ist die Verzögerungszeit linear von der Pumpleistung innerhalb der Faser abhängig.

Die Ankunft eines Pulses an einem Vermittlungsknoten lässt sich demnach über die optische Leistung einer von diesem Vermittlungsknoten aus gegenläufig in die Faser eingespeisten Pumpwelle steuern. Wird jedoch die Pumpleistung oder das Signal selbst zu groß, so gilt diese einfache Beziehung nicht mehr, da der Brillouin Gewinn in die Sättigung gerät, was die maximale Verzögerungszeit der Pulse begrenzt. Üblicherweise liegt die maximale Verzögerungszeit in wenigen km langen Fasern bei etwa 30 ns. In Experimenten wurden bei einer Faserlänge von 50 km Verzögerungszeiten von 60 ns erreicht. Diese Verzögerungszeiten lassen sich durch kaskadierte Verzögerung vergrößern, indem Fasersegmente durch breitbandige, unidirektionale Abschwächer voneinander getrennt werden. Dadurch, dass die Signalverstärkung immer wieder kompensiert wird, kann eine Verstärkung der spontanen Brillouin Emission und die Sättigung des Verstärkungsprozesses verhindert werden. Mit vier gleichen Fasersegmenten konnte eine maximale Verzögerungszeit von 152 ns erzielt werden.

Allerdings hat die SBS für diese Art der Anwendungen auch Nachteile: So ist sie zum einen besonders schmalbandig und zum anderen geht die Verzögerung mit einer starken Verzerrung der Pulse einher, wobei die Verzerrung mit der geringen Bandbreite der SBS zusammenhängt. So ist die Pulsverbreiterung am Ausgang der Verzögerungsleitung indirekt proportional zur Bandbreite der SBS in der Faser. Bei einer kohärenten Pumpwelle der Wellenlänge von 1550 nm hat der Brillouin-Gewinn in Standard-Single-Mode-Fasern (SSMF) eine lorentzförmige Einhüllende einer spektralen Halbwertsbreite von 30 MHz. Bei dieser geringen Bandbreite lassen sich lediglich Datenraten von rund 15 Mbit/s verzögern, wobei eine Verzögerung von 152 ns mit einer Pulsverbreiterung von 42 ns auf 102 ns einhergeht.

Neben dieser Pulsverbreiterung unterliegen die Datensignale in solchen SBS-Verzögerungsleitungen noch anderen Verzerrungen. Das sind beispielsweise eine Vergrößerung der Anstiegs- und Abfallzeit der Pulse, ein variabler Gewinn über die Pulsbreite und eine variable Verzögerung innerhalb der Pulsbreite. So wurden beispielsweise die durch SBS hervorgerufenen Verzerrungen an Pulsen einer Frequenz von 10 Mhz und einer Breite von 40 ns untersucht, wobei die Verstärkung des Pulsmaximums kontinuierlich zwischen 0 dB und 23 dB verändert wurde. Die damit erzielten Verzögerungen lagen zwischen 0 und 23 ns. Durch eine schmalbandige Filterung erhöhten sich die Anstiegs- und Abfallzeiten der Pulse von 12.7 ns auf 30.3 ns. Dabei führt die Filterwirkung bei rechteckigen Signalen dazu, dass die Wellenform durch das Fehlen der hohen Frequenzen weicher wird und sich die Öffnung des Augendiagramms verringert.

Es wurden auch Möglichkeiten zur Vergrößerung der Bandbreite des Brillouin Gewinns untersucht. So wurde beispielsweise der Strom des Pumplaser in einem Maße von weniger als 1% mit einer Pseudozufalls-Bitsequenz (pseudorandom bit sequence PRBS) einer Bitrate von 38Mbit/s moduliert. Das Resultat war ein auf 325 MHz vergrößertes glockenförmiges Pumpspektrum. Dabei ist der Brillouin-Gewinn in der Faser die Faltung zwischen dem Spektrum der Pumpe und dem lorentzförmigen, natürlichen Brillouin Spektrum, das eine Breite von rund 30 MHz aufweist. Wenn die Pumpwelle ein breiteres Spektrum hat, wird die Breite des Gesamtspektrums im Wesentlichen von der spektralen Breite der Pumpwelle bestimmt. Mit dem oben genannten System wurden Pulse einer zeitlichen Dauer von 2.7 ns um etwas mehr als um ihre Pulslänge verzögert. Auf Grund der großen Bandbreite betrug die Pulsverbreiterung weniger als 25%.

Als andere Möglichkeit, große Slow-Light Bandbreiten zu erzielen, wurde die Modulation des Laserstroms mit einer Rauschquelle beschrieben. Auf diese Weise konnte die Slow-Light Bandbreite auf 1.9 GHz erhöht werden. Mit einer solchen Bandbreite lassen sich Datenraten von etwa 1 Gb/s verarbeiten, wobei 400 ps kurze Pulse wurden bis zu 1 ns verzögert. Dasselbe Konzept wurde auch dazu benutzt, die Slow-Light Bandbreite auf 12 GHz zu erweitern.

Bei allen bislang angewandten Verfahren für Slow- und Fast-Light auf der Basis der SBS wurde der schmalbandige Gewinn zur Verlangsamung und der Verlust zur Beschleunigung der Lichtpulse ausgenutzt. Dabei wurde die Bandbreite durch eine Modulation der Pumpwelle vergrößert. Da die Pumpwelle jedoch Gewinn und Verlust gleichzeitig erzeugt, ist die maximal erzielbare Bandbreite durch die Brillouin-Frequenzverschiebung begrenzt. So sind zunächst Gewinn und Verlust weit voneinander getrennt. Wird die Bandbreite der Brillouin-Streuung durch Modulation jedoch erhöht, so begegnen sich Gewinn und Verlust, wenn die Bandbreite der Brillouin-Frequenzverschiebung entspricht. Wird die Bandbreite noch weiter erhöht, kompensieren sich der Gewinn und der Verlust im Bereich der Frequenz *fp*. Heben sich beide gegenseitig auf, so entspricht der resultierende Gruppenbrechungsindex dem einer Faser ohne Pumpwelle. Die mit einem Pumplaser maximal erzielbare Bandbreite beträgt demnach ungefähr das Doppelte der Brillouin-Verschiebung in der Faser. Bei einer Pumpwellenlänge von 1550 nm sind dies in SSMF rund 22 GHz. Die damit maximal bearbeitbare Bitrate liegt in der Größenordnung der halben Bandbreite, also rund 10 Gbit/s, wobei dafür die resultierende Verzerrung relativ groß ist. Moderne Systeme der optischen Nachrichtentechnik übertragen jedoch Datenraten von 40 Gbit/s und mehr. Bei solch hohen Datenraten versagen die bekannten Systeme.

Die Aufgabe der Erfindung ist es nunmehr, ein Verfahren zu schaffen, das sich mit einfachen Mitteln kostengünstig umsetzen lässt und das Verzögerungen und Beschleunigungen von Signalen auch bei hohen Datenraten ermöglicht. Zudem ist es Aufgabe der Erfindung, ein System zur Umsetzung des Verfahrens zu schaffen.

Diese Aufgaben werden durch das Verfahren nach Anspruch 1 und das System nach Anspruch 7 gelöst. Vorteilhafte Ausgestaltungen sind in den jeweiligen Unteransprüchen genannt.

Der wesentliche Grundgedanke der Erfindung liegt darin, mindestens zwei PumpQuellen nahezu gleicher Bandbreite einzusetzen und einen der beiden von der ersten Pumpquelle erzeugten Brillouin-Peaks durch den Brillouin-Peak umgekehrten Vorzeichens der zweiten Pumpquelle zumindest in beträchtlichem Maße zu überlagern, zu kompensieren oder sogar zu "überkompensieren": Wenn der eine Brillouin-Verlust der einen Pump-Quelle "ausgelöscht" ist, kann die Bandbreite des Brillouin-Gewinns dieser Pump-Quelle aber über das Maß der Brillouin-Verschiebung hinaus erhöht werden. Diese Kompensation wird dadurch erreicht, dass zusätzlich zu der Strahlung der ersten Pump eine eine zweite Pumpstrahlung in den Wellenleiter eingespeist wird, deren Frequenz gegenüber der ersten Pumpstrahlung derart verschoben ist, dass sich das Gewinnspektrum des zweiten mit dem Verlustspektrum des ersten zumindest teilweise kompensiert. Das kann erreicht werden, wenn die Frequenzen der beiden Pumpquellen so eingestellt werden, dass sie etwa die doppelte Brillouin-Verschiebung auseinander liegen.

An dieser Stelle sei hervorgehoben, dass der Terminus "Brillouin-Gewinn" das schmalbandige Spektrum (Stokes-Peak) mit der um die Brillouinverschiebung geminderten Frequenz und "Brillouin-Verlust" das schmalbandige Spektrum (Anti-Stokes-Peak) mit der um die Brillouinverschiebung erhöhten Frequenz bezüglich der Frequenz der Signale und entgegengesetzem Vorzeichen bezeichnet. Eine Wechselwirkung mit dem "Brillouin-Gewinn" führt zu einer Verzögerung der Signale, während der "Brillouin-Verlust" eine Beschleunigung verursacht. Wenn die Erfindung nachfolgend im Wesentlichen anhand des Brillouin-Gewinns und der Verzögerung beschrieben wird, gilt Gleiches ebenso für den Brillouin-Verlust und die damit einhergehende Beschleunigung der Signale.

Für solche Maßnahmen zur Beeinflussung der Ausbreitungsgeschwindigkeit der von Lichtpulsen gebildeten Signale gibt es verschiedene Anwendungen. Mit der erfindungsgemäßen rein optischen Verzögerung können beispielsweise Zwischenspeicher in Systemen der optischen Paketübertragung realisiert oder unterschiedliche Bitströme in optischen Schaltnetzwerken synchronisiert werden. Außerdem kann sie zur Entzerrung gestörter optischer Pulse und zur Steuerung der Sende- bzw. Empfangscharakteristik von Antennensystemen eingesetzt werden. Die mit der erfindungsgemäßen Technologie realisierten optischen Zwischenspeicher können eine Schlüsselkomponente in zukünftigen optischen Kommunikations- und Informationsverarbeitungssystemen darstellen.

Um eine möglichst gute Kompensation der Peaks zu erhalten, werden die Bandbreiten der die Pumpstrahlungen erzeugenden Lichtquellen, die insbesondere von Lasern ("Pumplasern") gebildet werden, auf ein zumindest nahezu gleiches Maß eingestellt. Wenn dann zum Zwecke der stärkeren Verzögerung der Lichtsignale die Bandbreite des den "nutzbaren" Peak erzeugenden ersten Lasers beispielsweise durch Modulation künstlich erhöht wird, ist es vorteilhaft, diese Modulation auch dem "kompensierenden" Pumplaser aufzuprägen.

Die Möglichkeit, die Bandbreite des Gewinns noch weiter steigern zu können wird dadurch erreicht, dass weitere Pumplaser in dieser Art zusammengeschaltet werden, wobei immer der Gewinn des nächsten den Verlust des vorherigen kompensiert.

Da sich das Slow-Light Spektrum in der erfindungsgemäßen Art an die jeweilige Anwendung anpassen lässt, können auch mehrere Pumpeinheiten gleichzeitig verwendet werden, um z.B. verschiedene Kanäle aus einem wavelength-divisionmultiplex (WDM)-System unabhängig voneinander zu verzögern. Die maximal mit einem solchen System auf der Basis der SBS erzielbare Verzögerung hängt von der Bandbreite des Brillouin-Gewinns und dem Sättigungsverhalten der SBS ab. Wird die Pumpleistung zu groß, kommt es zu einem stimulierten Prozess. In diesem Fall verliert die Pumpwelle in hohem Maße optische Leistung an den sich in entgegengesetzter Richtung ausbreitenden Puls und kann ihn nicht mehr weiter verzögern. Dieser Sättigungsprozess führt dazu, dass man mit SBS-Verzögerungsleitungen üblicherweise eine maximale Verzögerung von 30 ns realisieren kann. Wird die Slow-Light Bandbreite vergrößert, sinkt die Verzögerungszeit. Eine Vergrößerung der Verzögerung ist bekanntermaßen durch ein kaskadieren mehrerer SBS-Leitungen möglich, was jedoch mit einem hohen technischen Aufwand einhergeht. Mit der Erfindung können nunmher durch Verringerung der Sättigung des Brillouin-Prozesses große Verzögerungszeiten in einer einzigen Verzögerungsleitung bei stark reduziertem technischen Aufwand erreicht werden. Dazu wird in einem breiten Verlustspektrum ein schmalbandiger Gewinn erzeugt.

Nachfolgend wird die Erfindung anhand der Figuren 1 bis 6 näher erklärt. Dabei zeigen:

**Figur 1**    die spektrale Anordnung der Peaks zweier Pumpquellen,

**Figur 2**    die Erhöhung der Bandbreite,

**Figur 3**    ein System zur Umsetzung des Verfahrens,

**Figur 4**    die Überlagerung mit einem schmalbandiges Gewinnspektrum,

**Figur 5**    die Änderung des Gruppenbrechungsindex und

**Figur 6**    Ergebnisse von Messungen.

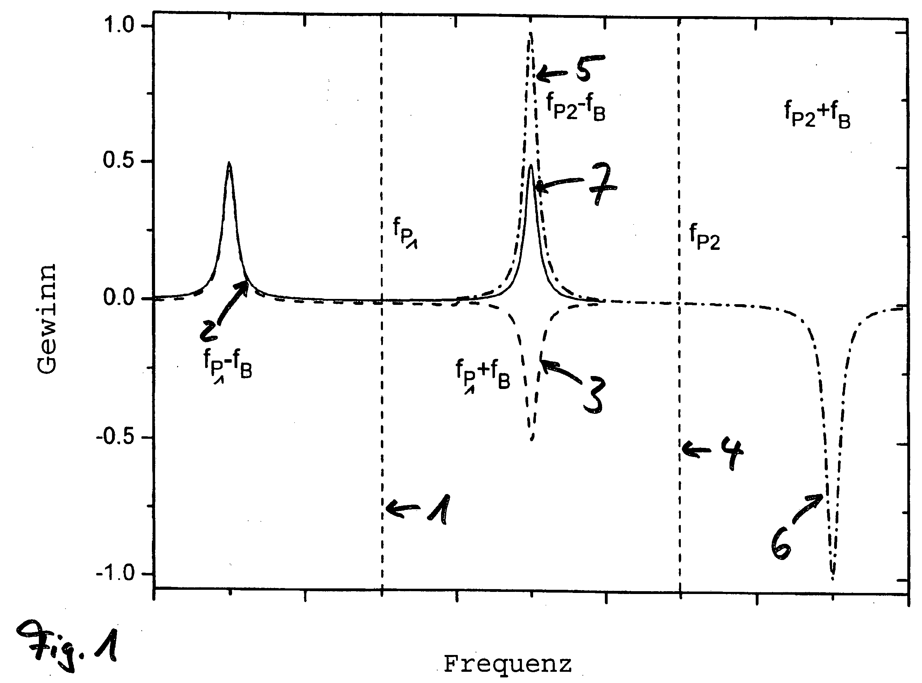

Figur 1 zeigt zunächst den grundlegendne Gedanken der hier vorgeschlagenen Vorgehensweise. Entgegen der Ausbreitung der Signale in einer Glasfaser wird ein erster Pumplaser 1 mit einer Frequenz $f_{P1}$ in die Glasfaser eingespeist. Dieser erzeugt ein Gewinnspektrum 2 bei der Frequenz $f_{P1}$ - $f_B$ und ein Verlustspektrum 3 bei der Frequenz $f_{P1}$ + $f_B$ (unterbrochene Linie). Auf die gleiche Weise wird ein zweiter Pumplaser 4 in die Glasfaser eingekoppelt, wobei dessen Frequenz so eingestellt wird, dass sein "Gewinn-Peak" 5 bei der Frequenz des "Verlust-Peaks" 3 des ersten Pumplasers 1 liegt. Die Frequenz des zweiten Pumplasers 4 liegt somit bei $f_{P2}$ = $f_{P1}$ +2 $f_B$. Dieser erzeugt ebenfalls einen Gewinn 5 bei $f_{P2}$ - $f_B$ und einen Verlust 6 bei $f_{P2}$ + $f_B$ (Strich-Punkt Linie). Da hier die Bandbreiten beider Pumplaser gleich sind, tritt der Verlust 3 des ersten Pumplasers 1 in demselben spektralen Bereich auf wie der Gewinn 5 des zweiten Pumplasers 4 auf, da $f_{P2}$ - $f_B$ = $f_{P1}$ + 2 $f_B$ - $f_B$ = $f_{P1}$ + $f_B$. Wenn die Leistungen beider Pumplaser gleich wäre, käme es zu einer gegenseitigen vollständigen Kompensation der Peaks. Der Verlust des ersten Pumplasers ist damit gewissermaßen nicht mehr vorhanden, so dass die Bandbreite, beispielsweise durch Modulation, über das bekannte Maß erhöht werden kann.

Ist die Leistung des zweiten Pumplasers 4, wie hier gezeigt, größer als die des ersten 1, so kommt es zu einer Überkompensation des Brillouin-Verlusts 3 des ersten Pumplasers 1, so dass auf beiden Seiten der Frequenz des ersten Pumplasers 1 ein "Gewinnspektrum" 7 erscheint (durchgezogene Linie). Wird nun die Bandbreite beider Pumplaser durch Modulation erhöht, so überlagern sich beide Gewinne. Das Resultat ist ein besonders breitbandiger Gewinn.

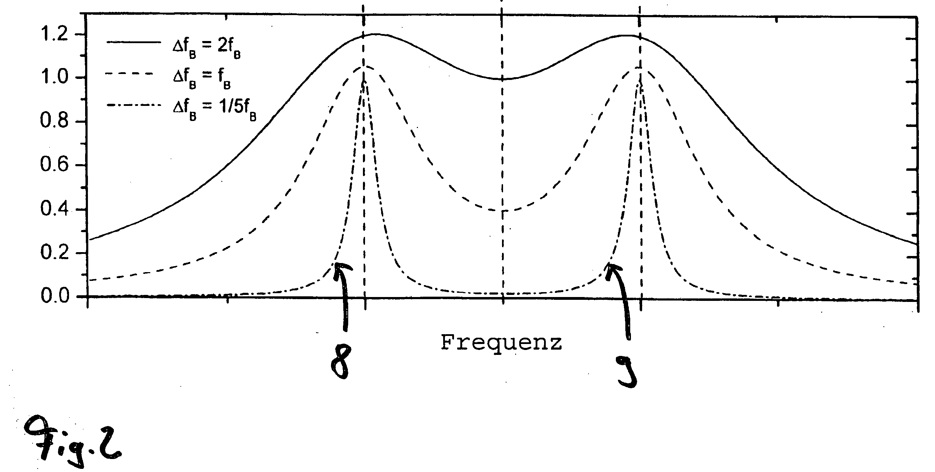

Figur 2 zeigt die Erhöhung der Bandbreite in drei Stufen, wobei die Bandbreiten in der Dimension der Brillouin-Verschiebung $f_B$ gemessen sind. In diesem Fall wird jeweils der Verlustpeak der ersten Pumpquelle soweit überkompensiert, dass der jeweilige Gewinnpeak 8 und der überkompensierte Verlustpeak 9 dieselbe Höhe haben. Die strichpunktierte Linie zeigt zwei Pumplaser der Bandbreite von 1/5 $f_B$. Beide Peaks sind deutlich voneinander getrennt. Die unterbrochene Linie zeigt zwei Pumplaser der Bandbreite von $f_B$. In diesem Fall überlagern sich die Peaks schon, wobei die Überlagerung bei der Bandbreite von 2$f_B$. nahezu vollständig ist (durchgezogene Linie).

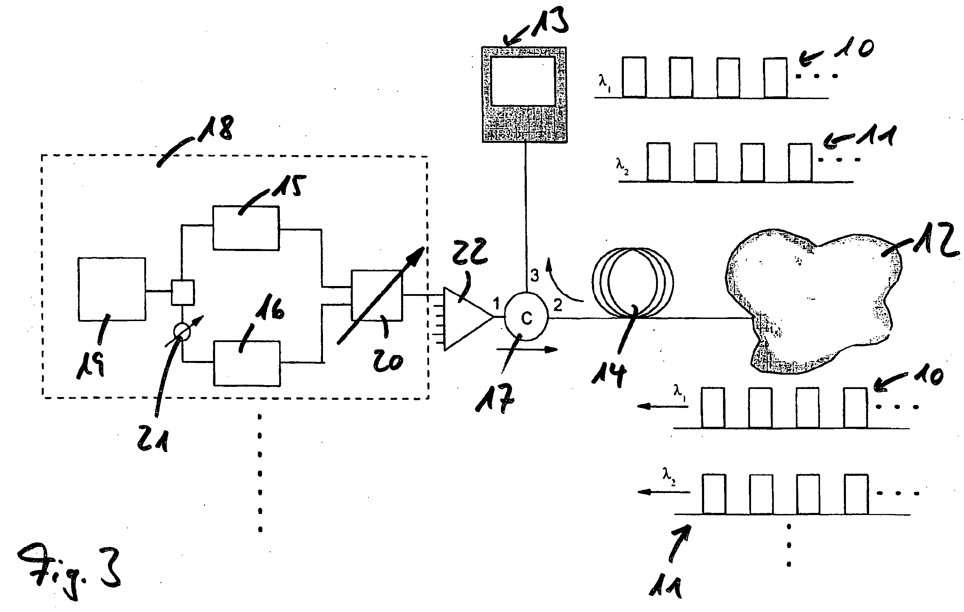

In Figur 3 ist ein System zur Umsetzung des Verfahrens dargestellt. Dabei kommen Signale, hier in Form zweier Bitfolgen 10 und 11, aus einem optischen Netz 12. Die Bitfolge 11 auf der Trägerwellenlänge $\lambda_2$ soll gegenüber der Bitfolge 10 auf der Trägerwellenlänge $\lambda_1$ verzögert und einer Verarbeitungseinheit 13 zugeführt werden.

Die zu verzögernde Bitfolge 11 bewegt sich von rechts nach links durch das Brillouin Medium, das von einer SSMF 14 gebildet wird. In entgegengesetzter Richtung breiten sich zwei Pumpwellen von den Laserdioden 15 und 16 aus, die einen Brillouin-Gewinn in der Faser 14 erzeugen. Die Pumpwellen werden durch einen Zirkulator 17 über dessen Port 1 ->2 in die Faser 14 eingespeist. Die Bitfolgen 11 und 12 werden durch denselben Zirkulator 17 über dessen Port 2->3 aus der Faser 14 ausgekoppelt und der Verarbeitungseinheit 13 zugeführt.

Das Gewinnspektrum zur Verzögerung der Bitfolge 11 erzeugt die Pumpeinheit 18. Diese umfasst die beiden Laserdioden 15 und 16, eine Rauschquelle 19, einen einstellbaren Koppler 20 und ein Potentiometer 21. Damit beide Laserdioden 15 und 16 dieselbe Bandbreite haben, werden sie durch die gemeinsame Rauschquelle 19 direkt über deren Ansteuerstrom moduliert. Die Bandbreite einer direkt modulierten Laserdiode hängt vom Modulationsgrad und damit von der Stärke des Stroms der Rauschquelle ab. Dieser lässt sich über das Potentiometer 21 einstellen.

Es sind auch andere Arten der Erweiterung des Brillouin Gewinns möglich, wie beispielsweise eine externe Modulation der Laser oder eine Modulation mit einer Bitfolge. Als Pumpquellen kommen neben den Laserdioden auch andere Laser, wie z.B. Festkörper- oder Gaslaser, in Frage.

Die Wellenlängen der beiden Laser werden in oben beschriebener Weise so eingestellt, dass das Gewinnspektrum des einen Lasers das Verlustspektrum des anderen kompensiert, wobei die Intensitäten so eingestellt werden, dass eine Überkompensation stattfindet. Da in diesem Beispiel die Bittfolge 11 gegenüber der Bittfolge 12 verzögert werden soll, wird das durch die Laserdioden 15 und 16 erzeugte Summen-Gewinnspektrum so eingestellt, dass es dem Spektrum des zu verzögernden Signals entspricht. Ist das Spektrum des zu verzögernden Signals sehr breitbandig kann ihm das Gewinnspektrum durch das hinzufügen weiterer Pumplaser angepasst werden.

Um ein möglichst flaches Brillouin-Gewinnspektrum zu erzielen, werden die optischen Leistungen der Laserdioden 15 und 16 in einem bestimmten Verhältnis zueinander eingestellt. Dies geschieht mit dem einstellbaren Koppler 20. Weitere Pumplaser können entsprechend über weitere einstellbare Koppler eingekoppelt werden. Mit dem sich anschließenden Erbium-dotierten Faserverstärker (EDFA) 22 wird die Pumpleistung verstärkt, wobei das Verhältnis der optischen Leistungen der Pumpwellen zueinander erhalten bleibt. Neben dem EDFA 22 kommen auch alle anderen Methoden einer optischen Verstärkung in Frage. Die Signale werden dann über den Port 2->3 des Zirkulators 17 aus der Faser 14 ausgekoppelt und zur weiteren Verarbeitung weitergeleitet.

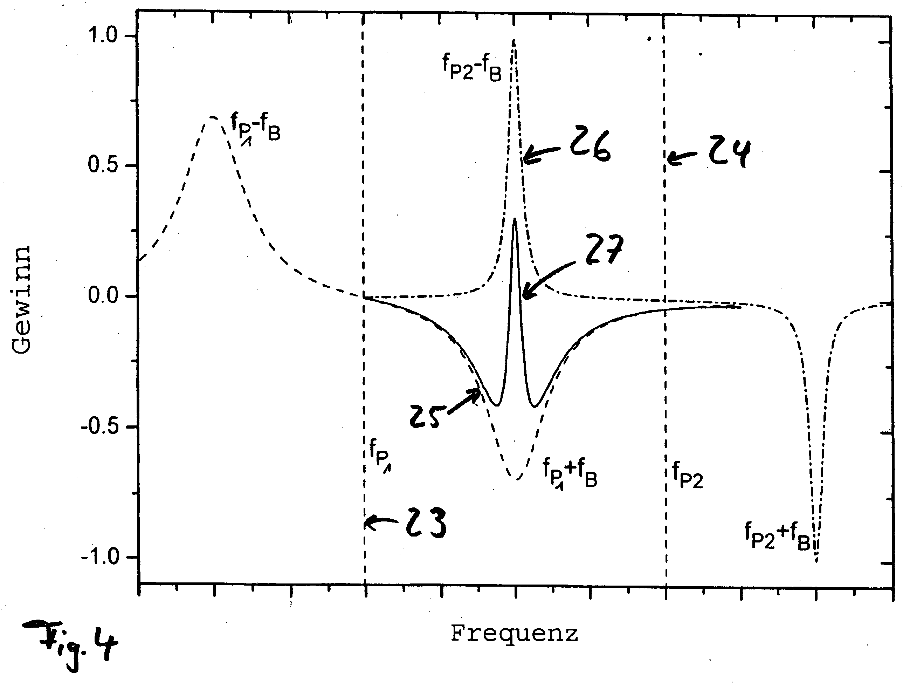

In einer konventionellen SBS Verzögerungsleitung ist die Sättigung und damit die maximale Verzögerung eine Funktion der Höhe des SBS-Gewinns, während die Verzögerung- oder Beschleunigung der Pulse vom Maße der Änderung des Brillouin-Gewinns mit der Frequenz abhängt. Verändert dieser sich langsam, so ist der Gruppenbrechungsindex und damit auch die Verzögerung gering. Verändert er sich jedoch schnell, so sind beide groß. Eine Verringerung der Höhe des Gewinns bei gleichzeitiger Beibehaltung der Veränderung mit der Frequenz führt daher zu größeren Verzögerungszeiten. Das wird erreicht, indem innerhalb eines breiten Verlustspektrums, das von dem einem Pumplaser erzeugt wird, ein schmalbandiges Gewinnspektrum mit dem zweiten der beiden Pumplaser generiert wird. Eine solche Anordnung der Frequenzen der beide Pumplaser 23 und 24 ist in Figur 4 gezeigt. Diese Anordnung entspricht im Prinzip der von Figur 1. Im Unterschied dazu, ist jetzt jedoch das Verlustspektrum 25 des Pumplasers 23 (gestrichelte Linie) breiter als das Gewinnspektrum 26 des Pumplasers 24 (Strich-Punkt-Linie). Bei der Überlagerung 27 (durchgezogene Linie) von Gewinn 26 und Verlust 25 weist der Verlust, der von $f_p$ erzeugt wird, einen starken Einbruch in der Mitte auf.

Ein konventionelles slow light system ist somit gleichzeitig auch ein optischer Verstaerker. Wenn das Signal verzoegert wird, so wird es zur selben Zeit verstaerkt. Die maximale Verzoegerung ist dann durch die Saettigung des Verstaerkers begrenzt. Wie gezeigt, kann mit Hilfe eines Verlustspektrums, das breiter als das Gewinnspektrum ist, die Saettigung des Verstaerkers verringert werden. Dadurch werden Verzoegerungszeiten von rund 100ns erreicht. Im Gegensatz zu konventionellen SBS Verzögerungs-Systemen ist in diesem Falle die Verzögerung unabhängig von der Stärke der Signale. Mit der Erfindung kann demnach die Ausgangsleistung der verzögerten Signale der jeweiligen Anwendung angepasst werden.

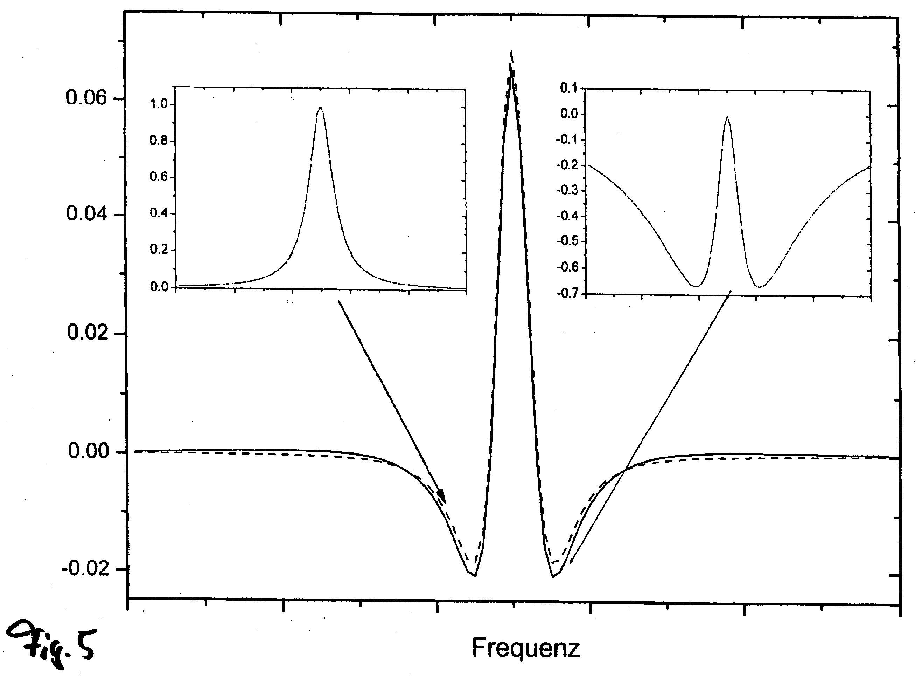

Figur 5 zeigt die Änderung des Gruppenbrechungsindex und damit die zu erwartende Verzögerung für einen reinen Brillouin-Gewinn (gestrichelte Linie) und den mit der hier beschriebenen Methode veränderten Brillouin Gewinn (durchgezogene Linie). Wie zu erkennen ist, ist der absolute Gewinn für einen einzelnen Pumplaser höher (linkes kleines Bild) als wenn gleichzeitig mit einem zweiten Laser ein Verlust erzeugt wird (rechtes kleines Bild). Trotzdem verhält sich die Änderung des Gruppenbrechungsindex für beide annähernd gleich und die maximal erzielbare Verzögerung ist identisch. Eine derartige Slow-Light Bandbreite lässt sich z.B. durch eine Veränderung der Einstellung des Potentiometers erzielen. Dies bewirkt eine unabhängige Änderung des Rauschanteils auf dem Ansteuerstrom der beiden Laserdioden. Da bei direkter Modulation die Bandbreite der Pumpwelle von der Modulationstiefe des Ansteuerstroms bestimmt wird, lässt sich damit die Bandbreite beider Laser unabhängig voneinander verändern.

Anstatt einen Gewinn in einem Verlustspektrum unterzubringen, um eine Verlangsamung der Signale zu erreichen, lässt sich mit der oben beschriebenen Methode auch ein Verlust in einem Gewinnspektrum unterbringen, um die Signale schneller laufen zu lassen.

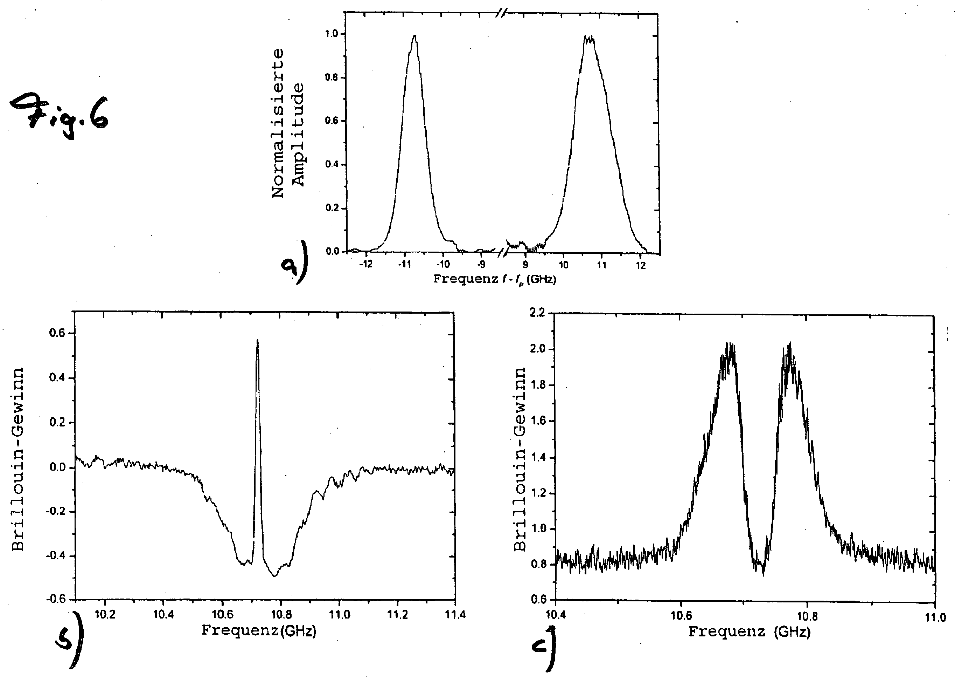

Figur 6 zeigt die gemessenen Ergebnisse zur Veränderung des Brillouin Gewinnspektrums. In der oberen Abbildung 6a ist rechts und links von einem Pumplaser nach der Methode der Figur 1 ein Brillouin-Gewinn erzeugt worden. Unten links 6b wurde ein Gewinn- in einem Verlustspektrum und unten rechts 6c ein Verlustin einem Gewinnspektrum generiert.

## Patentansprüche

**1.** Verfahren zur Beeinflussung der Ausbreitungsgeschwindigkeit von Lichtsignalen (10,11), die sich mit einer Gruppengeschwindigkeit innerhalb eines Wellenleiters (14) in der Ausbreitungsrichtung ausbreiten, wobei in den Wellenleiter (14) eine erste Pumpstrahlung eines begrenzten Frequenzbereiches entgegen der Ausbreitungsrichtung der Lichtsignale (10,11) eingekoppelt wird, wobei zwischen der ersten Pumpstrahlung und den Lichtsignalen (10,11) eine stimulierte Brillouin Streuung (SBS) stattfindet, wobei zusätzlich zu der ersten Pumpstrahlung eine zweite Pumpstrahlung in den Wellenleiter (14) eingekoppelt wird, deren Frequenz gegenüber der ersten Pumpstrahlung derart verschoben ist, dass das Gewinnspektrum (5) der zweiten Pumpstrahlung das Verlustspektrum (3) der ersten Pumpstrahlung zumindest teilweise überlagert,
**dadurch gekennzeichnet,**
**dass** die Bandbreiten der die Pumpstrahlungen erzeugenden Lichtquellen (15,16) auf ein zumindest nahezu gleiches Maß eingestellt werden, wobei sich Gewinnspektrum (5) und Verlustspektrum (3) zumindest teilweise kompensieren.

2. Verfahren nach Anspruch 1,
**dadurch gekennzeichnet,**
**dass** die Bandbreite der beiden die Pumpstrahlungen erzeugenden Lichtquellen (15,16) mit separaten Mitteln (19), insbesondere durch Modulation, erhöht wird.

3. Verfahren nach Anspruch 1 oder 2,
**dadurch gekennzeichnet,**
**dass** die Intensität der zweiten Lichtquelle (16) über das Maß der Intensität der ersten Lichtquelle (15) hinaus erhöht wird, um eine Überkompensation zu erreichen.

4. Verfahren nach einem der vorherigen Ansprüche,
**dadurch gekennzeichnet,**
**dass** Pumpstrahlung einer oder mehrerer weiterer Lichtquellen entgegen der Ausbreitungsrichtung in den Wellenleiter (14) eingekoppelt wird, wobei deren Frequenzen jeweils etwa die doppelte Brillouin-Verschiebung auseinander liegen, so dass eine Kompensation der Spektren benachbarter Lichtquellen stattfindet.

5. Verfahren nach einem der vorherigen Ansprüche,
**dadurch gekennzeichnet,**
**dass** als Lichtquellen (15, 16) Pumplaser (1,4) eingesetzt werden, wobei der zweite Pumplaser auf eine höhere Leistung als der erste Pumplaser eingestellt wird.

6. Verfahren nach einem der vorherigen Ansprüche,
**dadurch gekennzeichnet,**
**dass** mit dem ersten Pumplaser (1) der Frequenz $f_{P1}$ ein Gewinnspektrum (2) bei einer Frequenz $f_{P1} - f_B$ und das Verlustspektrum (3) bei einer Frequenz von $f_{P1} + f_B$ erzeugt wird und dass mit dem zweiten Pumplaser (4) einer Frequenz $f_{P2}$ das Gewinnspektrum (5) bei einer Frequenz $f_{P2} - f_B$ und ein Verlustspektrum (6) bei einer Frequenz $f_{P2} + f_B$ erzeugt wird.

7. System zur Umsetzung des Verfahrens nach einem der vorherigen Ansprüche,
**gekennzeichnet durch**
eine Pumpeinheit (18) mit mindestens zwei Pumpquellen, insbesondere mit Pumplasern (15,16), nahezu gleicher Bandbreite zur Erzeugung von Pumpstrahlung unterschiedlicher Frequenz, wobei ein Mittel (17) vorhanden ist, das eine Einkopplung der Pumpstrahlung beider Quellen in einen Wellenleiter (14) entgegen der Ausbreitungsrichtung sich darin ausbreitender Lichtsignale (10,11) ermöglicht, wobei die Frequenzen der Pumpquellen derart gewählt sind, dass sich Gewinnspektrum (5) und Verlustspektrum (3) zumindest teilweise kompensieren.

8. System nach Anspruch 7,
**dadurch gekennzeichnet,**
**dass** die Pumpeinheit (18) eine Rauschquelle (19) zur Veränderung der Bandbreite mindestens einer der Pumplaser (15, 16) aufweist, wobei der Modulationsgrad über die Stärke des an der Rauschquelle (19) anliegenden Stroms einstellbar ist.

**Claims**

1. A method for influencing the propagation velocity of light signals (10, 11), which propagate with a group velocity within a waveguide (14) in the propagation direction, wherein a first pump radiation of a limited frequency range is coupled into the waveguide (14) against the propagation direction of the light signals (10, 11), wherein a stimulated Brillouin scattering (SBS) takes place between the first pump radiation and the light signals (10, 11), wherein in addition to the first pump radiation, a second pump radiation is coupled into the waveguide (14), the frequency of which is displaced relative to that of the first pump radiation such that the gain spectrum (5) of the second pump radiation at least partially overlaps the loss spectrum (3) of the first pump radiation,
**characterised in that**,
the bandwidths of the light sources (15, 16) generating the pump radiations are adjusted to at least approximately equal extent, wherein the gain spectrum (5) and the loss spectrum (3) at least partially compensate each other.

**2.** The method in accordance with claim 1,
**characterised in that**,
the bandwidth of the two light sources (15, 16) generating the pump radiations is increased using separate means (19), in particular by modulation.

**3.** The method in accordance with claim 1 or 2,
**characterised in that**,
the intensity of the second light source (16) is increased above the degree of the intensity of the first light source (15) so as to achieve overcompensation.

**4.** The method in accordance with one of the preceding claims,
**characterised in that**,
pump radiation of one or a plurality of further light sources is coupled into the waveguide (14) against the propagation direction, wherein their frequencies in each case differ by approximately double the Brillouin shift, so that compensation of the spectra of adjacent light sources takes place.

**5.** The method in accordance with one of the preceding claims,
**characterised in that**,
pump lasers (1, 4) are deployed as light sources (15, 16), wherein the second pump laser is adjusted to a higher power output than the first pump laser.

**6.** The method in accordance with one of the preceding claims,
**characterised in that**,
with the first pump laser (1) of frequency $f_{P1}$, a gain spectrum (2) is generated at a frequency $f_{P1} - f_B$ and the loss spectrum (3) is generated at a frequency of $f_{P1} + f_B$, and **in that**, with the second pump laser (4) of frequency $f_{P2}$, a gain spectrum (2) is generated at a frequency $f_{P2} - f_B$ and the loss spectrum (3) is generated at a frequency of $f_{P2} + f_B$.

**7.** A system for the implementation of the method in accordance with one of the preceding claims,
**characterised by**
a pump unit (18) with at least two pump sources, in particular pump lasers (15, 16), with approximately the same bandwidth for purposes of generating pump radiation of differing frequency, wherein a means (17) is present that enables a coupling of the pump radiation of both sources into a waveguide (14) against the propagation direction of the light signals (10, 11) propagating within the latter, wherein the frequencies of the pump sources are selected such that the gain spectrum (5) and loss spectrum (3) at least partially compensate each other.

**8.** The system in accordance with Claim 7,
**characterised in that**,
the pump unit (18) has a noise source (19) for purposes of altering the bandwidth of at least one of the pump lasers (15, 16), wherein the modulation level can be adjusted by means of the strength of the current present at the noise source (19).


**Revendications**

**1.** Procédé destiné à influencer la vitesse de propagation de signaux lumineux (10, 11) qui se propagent avec une vitesse de propagation de groupe à l'intérieur d'un guide d'ondes (14) dans la direction de la propagation, pour lequel dans le guide d'ondes (14) est injecté un premier rayonnement de pompage d'une gamme de fréquences limitée opposé à la direction de propagation des signaux lumineux (10, 11), une dispersion de Brillouin stimulée (DBS) ayant lieu entre le premier rayonnement de pompage et les signaux lumineux (10, 11), un deuxième rayonnement de pompage dans le guide d'ondes (14) étant injecté en plus du premier rayonnement de pompage dont la fréquence est décalée vis-à-vis du premier rayonnement de pompage de telle manière que le spectre de gain (5) du deuxième rayonnement de pompage superpose au moins en partie le spectre de perte (3) du premier rayonnement de pompage
**caractérisé en ce que**
les largeurs de bande des sources lumineuses générant les rayonnements de pompage (15, 16) sont réglées sur au moins une mesure à peu près identique, pour lequel le spectre de gain (5) et le spectre de perte (3) se compensent au moins en partie.

**2.** Procédé selon la revendication 1
**caractérisé en ce que**
la largeur de bande des deux sources lumineuses (15, 16) générant les rayonnements de pompage est augmentée par des moyens séparés (19), en particulier par modulation.

**3.** Procédé selon la revendication 1 ou 2
**caractérisé en ce que**
l'intensité de la deuxième source lumineuse (16) est augmentée au dessus de la mesure de l'intensité de la première source lumineuse (15) pour obtenir une surcompensation.

**4.** Procédé selon l'une quelconque des revendications précédentes
**caractérisé en ce que**
le rayonnement de pompage d'une ou plusieurs autres sources lumineuses est injecté opposé à la direction de propagation dans le guide d'ondes (14), leurs fréquences étant respectivement à peu près le double décalage de Brillouin l'une par rapport à l'autre de sorte qu'une compensation des spectres des sources lumineuses voisines a lieu.

**5.** Procédé selon l'une quelconque des revendications précédentes
**caractérisé en ce que**
des lasers de pompage (1, 4) sont utilisés comme sources lumineuses (15, 16), le deuxième laser de pompage étant réglé à une puissance plus élevée que le premier laser de pompage.

**6.** Procédé selon l'une quelconque des revendications précédentes
**caractérisé en ce**
**qu'**avec le premier laser de pompage (1) de fréquence $f_{P1}$ on produit un spectre de gain (2) à une fréquence $f_{P1} - f_B$ et le spectre de perte (3) à une fréquence de $f_{P1} + f_B$ et en ce qu'avec le deuxième laser de pompage (4) d'une fréquence de $f_{P2}$, le spectre de gain (5) est produit à une fréquence de $f_{P2} - f_B$ et un spectre de perte (6) à une fréquence $f_{P2} + f_B$.

**7.** Système destiné à la transformation du procédé selon l'une quelconque des revendications précédentes
**caractérisé par**
une unité de pompage (18) avec au moins deux sources de pompage, en particulier avec des lasers de pompage (15, 16), à peu près de la même largeur de bande pour la production de rayonnement de pompage de fréquence différente, un moyen (17) étant existant qui permet une injection du rayonnement de pompage des deux sources dans un guide d'ondes (14) contrairement à la direction de propagation des signaux lumineux (10, 11) qui s'y propagent, les fréquences des sources de pompage étant choisies de telle manière que le spectre de gain (5) et le spectre de perte (3) se compensent au moins en partie.

**8.** Système selon la revendication 7
**caractérisé en ce que**
l'unité de pompage (18) comporte une source de bruit (19) pour modifier la largeur de bande au moins d'un des lasers de pompage (15, 16), le degré de modulation au-dessus de l'intensité du courant appliqué à la source de bruit (19) pouvant être réglé.

Fig. 1

EP 2 111 677 B1

Fig. 2

EP 2 111 677 B1

Fig. 3

EP 2 111 677 B1

Fig. 4

EP 2 111 677 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHIN et al.** *Optics Express,* vol. 14 (22), 10684-10692